# EUROPEAN PATENT APPLICATION

(11) **EP 1 480 206 A2**
(43) Date of publication of application: **24.11.2004**
(21) Application number: 04252899.2
(22) Date of filing: 19.05.2004
(51) Int. Cl.: G11B 7/007

(54) **Small-sized optical disc, apparatus and method for recording data to small-sized optical disc, and apparatus and method for reproducing data recorded to small-sized optical disc**

(30) Priority: 19.05.2003 KR 2003031543
(71) Applicant: Samsung Electronics Co., Ltd., Suwon-si, Gyeonggi-do 442-742 (KR)
(72) Inventor: Kim, Ki-hyun, Bandang-gu, Seongnam-si, Gyeonggi-do (KR); Lee, Yoon-woo, Yeongtong-gu, Suwon-si, Geyonggi-do (KR); Han, Sung-hya, Songpa-gu, Seoul (KR)
(74) Representative: Robinson, Ian Michael

(57) **Abstract**

An optical disc, a method and apparatus for recording data to the optical disc, and a method and apparatus for reading data from the optical disc, the optical disc having a lead-in area (110), a user data area (130), and a lead-out area (150) sequentially arranged from an outer radius to an inner radius of the optical disc.

## Description

The present invention relates to a small-sized optical disc, apparatuses to record and reproduce data to and from the small-sized optical disc, and methods of recording and reproducing data to and from the small-sized optical disc.

Different types of information recording media include magnetic discs such as a floppy disc and a hard disc, magnetic tape, semiconductor memory chips such as ROM and RAM, and optical discs such as CDs and DVDs.

Among the information recording mediums, the recording capacity of an optical disc has rapidly increased along with the development of semiconductor techniques and signal processing techniques, and the price of optical discs is relatively low.

Information recorded in an optical disc is recorded as block units with a predetermined size. The block unit in which data is recorded is also a basic unit for error correction code (ECC). A size of the ECC block used in a conventional optical disc is generally 32 KByte or 64 KByte.

Attempts have been made to use the optical disc as an information recording medium for recording and/or reproducing both sound and an image simultaneously with a portable electronic device such as a camcorder.

However, use of the optical disc in such a portable electronic device like a camcorder has a few shortcomings. That is, the widely used size of the optical disc, which is 80mm or 120 mm, is too big for a camcorder, and power consumption is too high using the conventionally sized disc.

Accordingly, to use an optical disc as an information recording medium for a portable electronic device, an optical disc with a smaller size, but a higher recording density, than a conventional optical disc is required.

However, when recording data on a small-sized optical disc with a conventional size ECC block unit, a problem may occur in an inner circumference area of the small-sized optical disc.

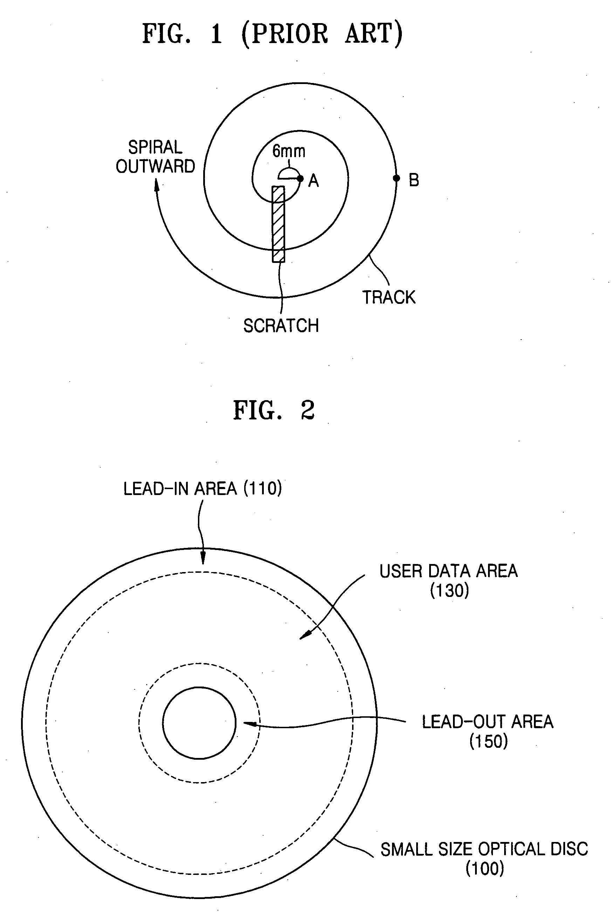

Figure 1 is a schematic drawing illustrating an inner circumference area of a small optical disc in which data is recorded in conventional ECC block units.

Referring to Figure 1, when a 64 Kbyte ECC block unit is recorded from an inner circumference area to an outer circumference area in the data recording area within a radius of 6 mm from the center of a small-sized optical disc, the ECC block unit is recorded in the area from point A to point B. That is, when recording a ECC block unit from the innermost circumference area of the small-sized optical disc, it is recorded over almost two tracks. If there is a scratch on an inner circumference area in a radial direction, as shown in FIGURE 1, a serious error may occur in the ECC block unit recorded in the innermost circumference area, thus reducing error correction capability remarkably.

That is, when the ECC block unit is not recorded to only one track, but to two tracks of the small-sized optical disc, the error correction capability of the recorded ECC block unit is remarkably reduced if there is any defect on the inner circumference area such as a scratch.

A conventional optical disc has a lead-in area, a user data area, and a lead-out area sequentially formed from an inner circumference area to an outer circumference area. Generally important information for reproducing data of the optical disc is recorded in the inner circumference area corresponding to the lead-in area.

Therefore, if there is a defect in the inner circumference area, such as a scratch on the optical disc, error correction capability of the ECC block unit recorded in the inner circumference area is greatly reduced.

According to the present invention there is provided an apparatus and method as set forth in the appended claims. Preferred features of the invention will be apparent from the dependent claims, and the description which follows.

The present invention provides a small-sized optical disc that can effectively prevent errors in important information used in reproducing data from the small-sized optical disc.

The present invention also provides an apparatus to record data to a small-sized optical disc that can effectively prevent errors in important information used in reproducing data from the optical disc, and a method of recording data to the small-sized optical disc.

The present invention also provides an apparatus to reproduce data from a small-sized optical disc that can effectively prevent error in important information used in reproducing data from the optical disc, and a method of reproducing data from the small-sized optical disc.

Additional aspects and/or advantages of the invention will be set forth in part in the description which follows and, in part, will be obvious from the description, or may be learned by practice of the invention.

According to an aspect of the present invention, there is provided an optical disc having a lead-in area, a user data area, and a lead-out area, wherein the lead-in area, the user data area, and the lead-out area are sequentially formed from an outer radius to an inner radius of the optical disc.

The data may be recorded to the optical disc in record units, each of the record units having a greater length than a length of a track of a predetermined inner area of the optical disc. The data may be recorded to the optical disc in a direction from the outer radius toward the inner radius of the optical disc. Identical data may be recorded in at least two record units.

According to another aspect of the present invention, there is provided a data recording apparatus comprising an optical head; an optical disc information storage unit to store data area structure information of an optical disc in which a lead-in area, a user data area, and a lead-out area are sequentially formed from an outer radius to an inner radius of the optical disc; and a control unit to control the optical head to record data to one of the lead-in area, the user data area, and the lead-out area according to a type of the data to be recorded by referring to the data area structure information.

The control unit may control the optical head to record data to the optical disc in record units, each of the record units having a greater length than a length of a track in a predetermined inner area. Also, the control unit may control the optical head to record the data in a direction from the outer radius to the inner radius of the optical disc. The control unit may control the optical head to record identical data in at least two record units in response to data being recorded in the lead-out area.

According to another aspect of the present invention, there is provided a method of recording data to an optical disc, the method comprising selecting one of a lead-in area, a user data area, and a lead-out area of the optical disc to record the data according to a type of the data to be recorded; and recording the data to the selected area according to the data area structure information of the optical disc, wherein the optical disc data area structure information indicates that the lead-in area, the user data area, and the lead-out area are sequentially formed from an outer radius to an inner radius of the optical disc.

The recording the data to the selected area of the optical disc may comprise recording the data in record units, each of the record units having a greater length than a length of a track in a predetermined inner area.

The recording the data to the selected area of the optical disc may comprise recording the data in a direction from the outer radius to the inner radius of the optical disc. The recording the data to the selected area of the optical disc may comprise recording identical data in at least two record units.

According to another aspect of the present invention, there is provided a data reproducing apparatus comprising an optical head; an optical disc information storage unit to store data area structure information of an optical disc in which a lead-in area, a user data area, and a lead-out area are sequentially formed from an outer radius to an inner radius of the optical disc; and a control unit to control the optical head to read data from one of the lead-in area, the user data area, and the lead-out area according to a type of the data to be read by referring to the data area structure information.

According to the embodiment of the data reproducing apparatus, the data in the optical disc may be recorded in record units, each of the record units having a greater length than of a length of a track in a predetermined inner area of the optical disc. The control unit may control the optical head to read data in a direction from the outer radius to the inner radius of the optical disc.

According to another aspect of the present invention, there is provided a method of reproducing data from an optical disc, the method comprising: selecting one of a lead-in area, a user data area, and a lead-out area of the optical disc from which to reproduce the data according to a type of the data to be read; and reading the data from the selected area according to data area structure information of the optical disc, wherein the optical disc data area structure information indicates that the lead-in area, the user data area, and the lead-out area are sequentially formed from an outer radius to an inner radius of the optical disc.

According to the embodiment of the data reproducing method, the data in the optical disc may be recorded in record units, each of the record units having a greater length than a length of a track in a predetermined inner area. The reading the data from the selected area of the optical disc may comprise reading the data in a direction from the outer radius to the inner radius of the optical disc.

For a better understanding of the invention, and to show how embodiments of the same may be carried into effect, reference will now be made, by way of example, to the accompanying diagrammatic drawings in which:
Figure 1 is a schematic drawing of an innermost area of a small-sized optical disc on which conventional ECC block unit data is recorded;
Figure 2 is a schematic drawing of a small-sized optical disc according to an embodiment of the present invention;
Figure 3 is a block diagram of an apparatus to record and reproduce according to an embodiment of the present invention;
Figure 4 is a schematic drawing of an optical disc information table;
Figure 5 is a flow chart illustrating a method of recording data according to an embodiment of the present invention; and
Figure 6 is a flow diagram illustrating a method of reproducing data according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the Figures.

Figure 2 is a schematic drawing of a small-sized optical disc according to an embodiment of the present invention.

Referring to Figure 2, a small-sized optical disc 100 comprises a lead-in area 110, a user data area 130, and a lead-out area 150, located sequentially from an outer circumference to an inner circumference of the small-sized optical disc 100.

The lead-in area 110 is an area in which data to be used in operating the small-sized optical disc 100, i.e., data used to record and reproduce the recorded user data, is recorded, and extends from an outermost circumference to a predetermined inner circumference.

Examples of information recorded in the lead-in area 110 are data regarding the small-sized optical disc 100 and information relating to error correction if a defect management function is provided. The defect management information is information including an address of a defect and an address of a substitution area where user data is recorded when a defect occurs, and includes user data recorded in the substitution area.

Also, an optimum power control (OPC) area can be allocated in the lead-in area 110. The OPC area is an area used to test recording conditions when recording data to the small-sized optical disc 100.

The user data area 130 is an area in which user data is recorded. The data structure of the lead-out area 150 is similar to the data structure of the lead-in area 110, and a portion of information recorded in the lead-in area 110 is also recorded in the lead-out area 150.

In a conventional small-sized optical disc, one ECC block is recorded to more than two tracks because the circumference of the innermost area is too small to record the one ECC block, or the one ECC block cannot be recorded in a predetermined inner area. To improve the error reducing capability of error correction of important information recorded in the inner area when a defect occurs, the lead-in area 110, the user data area 130, and the lead-out area 150 according to an embodiment of the present invention are arranged sequentially from an outer radius to an inner radius of the optical disc.

That is, the important information relating to reproduction of data recorded in the lead-in area 110 of the optical disc 100 is recorded in the outer area, which is more resilient to defects than the inner area of the optical disc 100.

On the other hand, the data recorded in the lead-out area 150 is recorded in the inner area, which is less resilient to defects than the outer area. To reduce errors when reproducing data, the data to be recorded in the inner area, i.e., from the outer most circumference of the lead-out area to a predetermined inner circumference, is recorded in at least two recording units.

A recording unit is an ECC block, i.e., an error correction unit of data recorded in the optical disc.

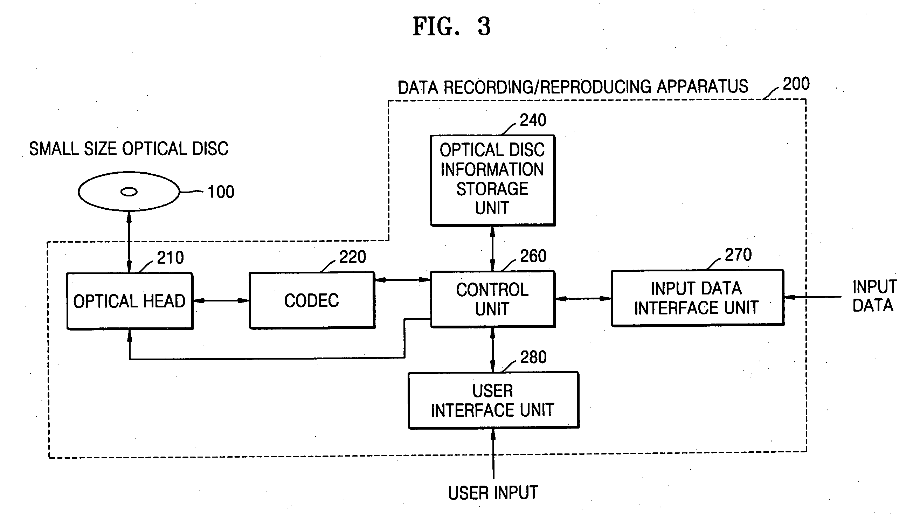

Figure 3 is a block diagram of an apparatus to record and/or reproduce data according to an embodiment of the present invention.

Referring to Figure 3, an apparatus 200 to record and/or reproduce data comprises an optical head 210, a codec 220, an optical disc information storage unit 240, a control unit 260, an input data interface unit 270, and a user interface unit 280.

The optical head 210 records data to a small-sized optical disc 100, or reads data recorded on the small-sized optical disc 100, in response to the control of the control unit 260.

The codec 220 encodes or modulates the data to be recorded to the small-sized optical disc 100 to a predetermined format, or decodes or demodulates the data read from the small-sized optical disc 100 to a predetermined format.

The optical disc information storage unit 240 stores information relating to the small-sized optical disc 100.

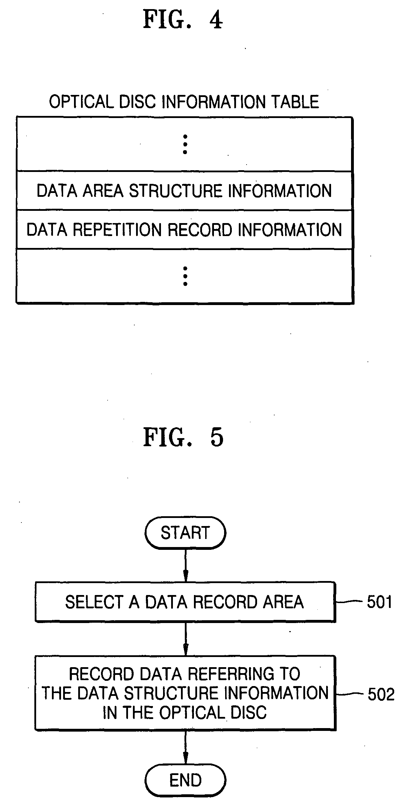

Figure 4 is a schematic drawing of an optical disc information table, including information relating to the small-sized optical disc 100, recorded in the optical disc information storage unit 240. Referring to Figure 4, data area structure information and data repetition record information are recorded in the optical disc information table.

The data area structure information relates to a data area of the small-sized optical disc 100, and respectively allocates the lead-in area 110, the user data area 130, and the lead-out area 150 of predetermined areas from the outer radius to the inner radius of the small-sized optical disc 100. The data repetition record information includes address information of at least two recording units in which the same data is to be recorded when recording data to the small-sized optical disc 100.

The control unit 260 controls the optical head 210 that records data to or reads data from the lead-in area 110, the user data area 130, or the lead-out area 150 according to the data area structure information recorded in the optical disc information table.

The control unit 260 also controls the optical head 210 to record the same data in at least two recording units when recording data in the lead-out area 150, referring to the data area structure information recorded in the optical disc information table.

The input data interface unit 270 transmits inputted data to be recorded to the small-sized optical disc 100 to the control unit 260. The user interface unit 280 transmits an order to record data to the small-sized optical disc 100 inputted from a user to the control unit 260.

Referring to the structure of the data recording/reproducing apparatus 200 as described above, a method of recording data to the small-sized optical disc 100 according to an embodiment of the present invention will now be described.

Figure 5 is a flow chart illustrating a method of recording data according to an embodiment of the present invention.

Referring to Figure 5, the control unit 260 determines one of the lead-in area 110, the user data area 130, and the lead-out area 150 to be a data recording area according to the type of data to be recorded to the small-sized optical disc 100 (operation 501).

When the recording area is selected, the control unit 260 determines an address of the data record area according to the data area structure information recorded in the optical disc information table of the optical disc information storage unit 240. The optical head 210 then records data in response to the control unit 260 (operation 502).

In the operation 502, the control unit 260 also controls the optical head 210 to record the same data in at least two recording units when data is recorded in the lead-out area 150 according to the data area structure information recorded in the optical disc information table of the optical disc information storage unit 240.

Hereinafter, according to the structure of the data recording/reproducing apparatus 200 as described above, a method of reading data from the small-sized optical disc 100 according to an embodiment of the present invention will now be described.

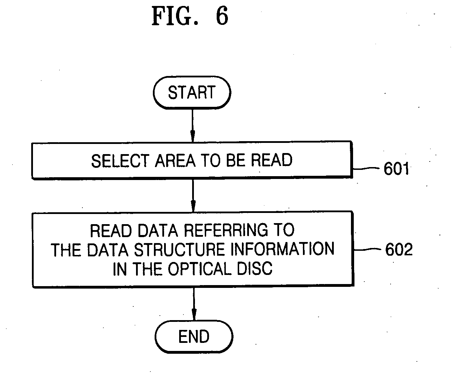

Figure 6 is a flow diagram illustrating a method of reading data according to an embodiment of the present invention.

Referring to Figure 6, the control unit 260 determines one of the lead-in area 110, the user data area 130, and lead-out area 150 to be a data reading area according to the kind of data to be read from the small-sized optical disc 100 (operation 601).

When the data reading area is selected, the control unit 260 controls the optical head 210 to read according to the data area structure information recorded in the optical disc information table of the optical disc information storage unit 240. The optical head 210 then reads data in response to the control unit 260 (operation 602).

The present invention can also be embodied as computer readable code on a computer readable recording medium. The computer readable recoding medium is any data storage device that can store data which can be thereafter read by a computer system. Examples of the computer readable recording medium include read-only memory (ROM), random access memory (RAM), CD-ROMs, magnetic tapes, floppy discs, optical data storage devices, and carrier waves. The computer readable recording medium can also be distributed over network coupled computer systems so that the computer readable code is stored and executed in a distributed fashion.

As described above, according to an embodiment of the present invention, in a small-sized optical disc in which one ECC block of data is not recorded to a track moving outward from an innermost area or a predetermined area, and not recorded to more than two tracks, errors in important information regarding reproducing data recorded on an optical disc can be prevented when the size of disc is reduced.

Errors caused by a scratch in an inner area of the small-sized optical disc, where error correction is difficult, can be prevented by recording the data to be recorded in the inner area in more than one location.

The recording apparatus and the method of recording to the small-sized optical disc, and the reading apparatus and the method of reading from the small-sized optical disc, according to embodiments of the present invention, can record data and read recorded data while effectively preventing errors in important information regarding reproducing data recorded on an optical disc.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical disc having a lead-in area (110), a user data area (130), and a lead-out area (150), wherein the lead-in area (110), the user data area (130), and the lead-out area (150) are sequentially formed from an outer radius to an inner radius of the optical disc.

2. The optical disc of claim 1, wherein data is recorded to the optical disc in record units, each of the record units having a greater length than a length of a track of a predetermined inner area of the optical disc.

3. The optical disc of claim 1 or 2, wherein data is recorded to the optical disc in a direction from the outer radius toward the inner radius of the optical disc.

4. The optical disc of claim 1, 2 or 3 wherein identical data is recorded in at least two record units.

5. The optical disc of any preceding claim, further comprising an optimum power control area in the lead-in area (110), to test recording conditions when recording data to the optical disc.

6. A data recording apparatus comprising:
an optical head (210);
an optical disc information storage unit (240) to store data area structure information of an optical disc in which a lead-in area (110), a user data area (130), and
a lead-out area (150) are sequentially formed from an outer radius to an inner radius of the optical disc; and
a control unit (260) to control the optical head (210) to record data to one of the lead-in area (110), the user data area (130), and the lead-out area (150) according to a type of the data to be recorded by referring to the data area structure information.

7. The data recording apparatus of claim 6, wherein the control unit (260) controls the optical head (210) to record data to the optical disc in record units, each of the record units having a greater length than a length of a track in a predetermined inner area.

8. The data recording apparatus of claim 6 or 7, wherein the control unit (260) controls the optical head (210) to record the data in a direction from the outer radius to the inner radius of the optical disc.

9. The data recording apparatus of claim 6, 7 or 8, wherein the control unit (260) controls the optical head (210) to record identical data in at least two record units in response to data being recorded in the lead-out area (150).

10. The data recording apparatus of any of claims 6 to 9, wherein the optical disc information storage unit (240) further stores data repetition record information comprising address information of at least two recording units in which repeated data is to be recorded.

11. A method of recording data to an optical disc, the method comprising:
selecting one of a lead-in area (110), a user data area (130), and a lead-out area (150) of the optical disc to record the data according to a type of the data to be recorded; and
recording the data to the selected area according to data area structure information of the optical disc, wherein the optical disc data area structure information indicates that the lead-in area (110), the user data area (130), and the lead-out area (150) are sequentially formed from an outer radius to an inner radius of the optical disc.

12. The method of claim 11, wherein the recording the data to the selected area of the optical disc comprises recording the data in record units, each of the record units having a greater length than a length of a track in a predetermined inner area.

13. The method of claim 11 or 12, wherein the recording the data to the selected area of the optical disc comprises recording the data in a direction from the outer radius to the inner radius of the optical disc.

14. The method of claim 11, 12 or 13, wherein the recording the data to the selected area of the optical disc comprises recording identical data in at least two record units.

15. A data reproducing apparatus comprising:
an optical head (210);
an optical disc information storage unit (240) to store data area structure information of an optical disc in which a lead-in area (110), a user data area (130), and a lead-out area (150) are sequentially formed from an outer radius to an inner radius of the optical disc; and
a control unit (260) to control the optical head (210) to read data from one of the lead-in area (110), the user data area (130), and the lead-out area (150) according to a type of the data to be read by referring to the data area structure information.

16. The data reproducing apparatus of claim 15, wherein the data in the optical disc is recorded in record units, each of the record units having a greater length than of a length of a track in a predetermined inner area of the optical disc.

17. The data recording apparatus of claim 15 or 16, wherein the control unit (260) controls the optical head (210) to read data in a direction from the outer radius to the inner radius of the optical disc.

18. A method of reading data from an optical disc, the method comprising:
selecting one of a lead-in area (110), a user data area (130), and a lead-out area (150) of the optical disc from which to read the data according to a type of the data to be read; and
reading the data from the selected area according to data area structure information of the optical disc, wherein the optical disc data area structure information indicates that the lead-in area (110), the user data area (130), and the lead-out area (150) are sequentially formed from an outer radius to an inner radius of the optical disc.

19. The method of claim 18, wherein the data in the optical disc is recorded in record units, each of the record units having a greater length than a length of a track in a predetermined inner area.

20. The method of claim 18 or 19, wherein the reading the data from the selected area of the optical disc comprises reading the data in a direction from the outer radius to the inner radius of the optical disc.

21. A recording medium on which a method of recording data to an optical disc is recorded, the method comprising:
selecting one of a lead-in area (110), a user data area (130), and a lead-out area (150) of the optical disc to record the data according to a type of the data to be recorded; and
recording the data to the selected area according to data area structure information of the optical disc, wherein the optical disc data area structure information indicates that the lead-in area (110), the user data area (130), and the lead-out area (150) are sequentially formed from an outer radius to an inner radius of the optical disc.

22. A recording medium on which a method of reading data from an optical disc is recorded, the method comprising:
selecting one of a lead-in area (110), a user data area (130), and a lead-out area (150) of the optical disc from which to read the data according to a type of the data to be read; and
reading the data from the selected area according to data area structure information of the optical disc, wherein the optical disc data area structure information indicates that the lead-in area (110), the user data area (130), and the lead-out area (150) are sequentially formed from an outer radius to an inner radius of the optical disc.

23. An optical disc comprising a plurality of data areas (110, 130, 150) to contain different types of data, wherein the data areas are sequentially formed from an outer radius to an inner radius of the optical disc.

24. The optical disc of claim 23, wherein the data is recorded in a direction from the outer radius to the inner radius of the optical disc.

25. The optical disc of claim 23 or 24, wherein the data is read in a direction from the outer radius to the inner radius of the optical disc.

26. An optical disc in which information relating to recording and/or reading data to/from the optical disc is located in a data area in an outer area (150) of the optical disc.

27. An optical disc in which data recorded in an inner area (110) of the optical disc is recorded in at least two recording units, so that errors in reproducing the data are minimized.
